# EUROPEAN PATENT SPECIFICATION

(11) **EP 0 660 971 B1**
(45) Date of publication and mention of the grant of the patent: **11.12.1996**
(21) Application number: 93919538.4
(22) Date of filing: 14.09.1993
(51) Int. Cl.: H02G 15/013, H02G 15/007, H02G 15/076

(54) **STRAIN RELIEF OR SEALING DEVICE FOR CABLE CLOSURE**
ZUGENTLASTUNG ODER ABDICHTUNGSVORRICHTUNG FUER KABELVERSCHLUSS
DISPOSITIF D'ALLEGEMENT DE CONTRAINTES OU D'ETANCHEITE POUR BOITIER DE CABLES

(30) Priority: 14.09.1992 GB 9219449
(43) Date of publication of application: 05.07.1995
(73) Proprietor: WALTER ROSE GmbH & Co. KG, D-58093 Hagen (DE)
(72) Inventor: FORTE, Jörg, D-58644 Iserlohn (DE); FEILER, Gerhard, D-58089 Hagen (DE); PAPENHEIM, Friedbert, D-4750 Unna (DE)
(74) Representative: Benson, John Everett
(86) International application number: GB9301942
(87) International publication number: WO9407288

(56) References cited:
- EP-A- 0 252 255
- WO-A-92/05609
- GB-A- 2 183 405
- US-A- 3 951 505
- US-A- 4 295 005

## Description

This invention relates to a device for strain relieving and/or sealing cables entering a cable enclosure and particularly to such a device comprising a plate containing recesses at the periphery thereof, through which, in use, cables can pass to enter the cable closure.

It is frequently necessary to strain relieve and/or seal cables entering an enclosure. Such an enclosure may be provided, for example, around groups of cables that have been spliced together end to end, or branched for example to split one cable into two or three.

One particular type or enclosure used in the field, and to which the present invention is applicable, is a radial distribution point in a telecommunications system. At a distribution point, a main cable is divided into many smaller cables. Typically such a distribution point enclosure comprises a dome shaped housing covering a base through which a main cable enters and a plurality of smaller wires or cables leave. The cables are sealed where they pass through the base.

One known base and dome cable enclosure known in the prior art for use at such a radial distribution point is described in WO 9205609 (WR140 PCT). This describes an embodiment in which the base comprises a disc-shaped plate containing U-shaped recesses at its outer periphery through which cables pass into the dome shaped enclosure. Elastic or plastic sealing means surround each cable and hinged half-ring elements then press around the periphery of the disc to retain the cables and sealing means within the recesses. A central core may extend outwards from the disc, containing recesses into which the cables are positioned, and a band type tightening element can be strapped therearound to provide strain relief.

Another arrangement in which cables are held in recesses in a clamping plate is described in EP-0252255. In this case a plate with C-shaped clamping sections for receiving cables is held against an item of equipment by means of fixing screws.

We have discovered a new arrangement for sealing and/or strain relieving and/or sealing cables entering through peripheral recesses of a plate constituting part of a cable enclosure. In our arrangement strain relief elements are provided that each individually bridge the entrance of the peripheral recesses. These strain relief elements can be inserted laterally relative to the plate.

GB-A-2183405 discloses a strain relief bushing comprising a pair of pillars and a key piece incorporating ratchet-like ribs or teeth which cooperate to permit the key piece to be pressed and snapped down between the pillars to clamp a cable, but lock the key piece against separation from the pillars in an upward direction. The teeth permit the key piece to be slid rearwardly, out from between the pillars upon inward deflection of resilient locking fingers to release the cable.

US 3951505 discloses a strain relief system for individually clamping the conductors extending from the rear end of an electrical connector. The strain relief system comprises a circular wafer having a plurality of angularly spaced slots for receiving the conductors to allow the wafer to be located next to the rear of the connector with a conductor located in each slot. A shell is adapted to be fitted around the wafer and threaded to the housing of the connector. Formed through the shell are a plurality of spaced openings for alignment with the slots when the shell is threaded in place. Inserts are adapted to be inserted through the openings into the slots for engaging each conductor and a clamping band is employed for surrounding the shell and engaging the outer ends of the inserts for clamping the inserts in place in the slots against the conductors.

A first aspect of the invention provides a device for strain relieving and/or sealing cables entering a cable enclosure, the device comprising:
a cable support comprising a plate having a recess at a periphery thereof through which, in use, a cable can pass to enter the cable enclosure; and
a strain relief element that can be moved by sliding it substantially perpendicularly to a cable in the recess to a position in which it bridges the recess and is unable to move away from the recess in a direction perpendicular to a cable therein;
the internal edges of the said recess containing slots extending in a direction substantially perpendicular to the plane of the plate, and the strain relief element being so shaped that it can be inserted into the slots by moving it in a direction substantially parallel to the plane of the plate, and then retained within the said slots by sliding it within the slots.

A second aspect of the present invention provides a device for strain relieving and/or sealing cables entering a cable enclosure, the device comprising a plate containing recesses at the periphery thereof, through which, in use, cables can pass to enter the cable enclosure, the internal edges of the said recesses containing slots extending in a direction substantially perpendicular to the plane of the plate and the device also comprising strain relief elements adapted to fit a least partly within the recesses to bridge the entrance of the recesses, and to cooperate with the said slots, the strain relief elements being so shaped that they can be inserted into the slots by moving them in a direction substantially parallel to the plane of the plate, and then retained within the said slots by sliding them within the slots.

When we say that "the strain relief elements are retained within the slots" we mean that they are retained against any force acting directly against their initial insertion direction, i.e. retained against any force acting substantially parallel to the plane of the plate outwards of the plate. The strain relief elements can generally be removed by a more complex movement involving reversing the slot sliding and insertion movement.

An advantage of the present invention is that the strain relief elements can be introduced from a direction substantially parallel to the plane of the plate, i.e. laterally of the plate. This means that there is no need for access for the strain relief element above or below the plane of the plate. This advantageously allows other elements of the cable enclosure, e.g. a separate sealing plate, and/or a dome housing or the like, to be positioned directly above the plate without interfering with the lateral installation of the strain relief elements.

In the present invention where reference is made to any directional terms such as up, down, vertical, horizontal, above, below, sideways etc. these are made assuming the plate of the device is arranged horizontally for mounting of a dome closure above it. This assumption is made for the purposes of clear explanation of the relative positions of elements, and is not intended to be limiting in any way.

The strain relief element preferably comprises three portions, namely:
(a) a handle portion secured to
(b) a slot cooperating portion, which is in turn secured to
(c) a cable holding portion.

The three portions are preferably joined to each other end to end, e.g. by a central connecting spindle.

Preferably the said internal edges of the said recesses of the plate also contain at least two elongate entry ports, on each side of each recess, extending from the said slots towards the periphery of the plate in a plane parallel to the plane of the plate, and the slot cooperating portion of the strain relief element comprises a central body portion and at least two projections extending laterally on either side thereof, which projections are arranged to slide through the entry ports at the edges of each recess to engage the slot cooperation portion of the strain relief element in the slot of the recess, and which projections can then slide within the said slot.

The size of the body portion of the slot cooperating portion of the strain relief element is small enough that, in the absence of the projections the slot cooperating portion could simply be pushed in and out of the recesses from the side of the plate without engaging in the slots of the plate, or cooperating with the plate at all, i.e. the projections on the strain relief element are the parts of the strain relief element that cooperate with the recesses in the plate. Typically these cable entry ports are in the form of channels, usually of smaller width and length than the said slots that extend perpendicular to the plate.

Part of the strain relief element, e.g. the slot cooperating portion of the strain relief element, may also be provided with an end stop, to limit the distance the slot cooperating portion can slide within the slots in the plate. For example the slot cooperating portion may be provided with outwardly projecting shoulders at its upper edge (assuming it is slid vertically within slots in a horizontally arranged plate). These shoulders may abut against the top face of the plate to limit further downward vertical movement of the strain relief device.

Preferably the slot cooperating portion of the strain relief element is substantially planar.

Preferably the recesses in the plate for accepting the cable are substantially U-shaped when the plate is viewed in plan view. This means that the sides of the recesses are substantially parallel to each other. Preferably the said slots on the internal edges of the recesses are positioned towards the tips of the arms of the "U" shape. All the recesses may be similarly sized and shaped or different sizes and shapes may be used depending on the cables to be inserted.

The plate is generally of uniform thickness. The slots extend perpendicular to the plane of the plate, i.e. through the thickness of the plate. The slots extend through the complete thickness of the plate. The plate may be any shape. For example, it may be circular, oval or rectilinear in cross-section, or have some straight and some curved sides.

The device according to the first aspect of the invention (for providing strain relief) may be used in combination with a sealing plate. A preferred sealing plate comprises similarly shaped recesses to those in the first plate (hereinafter the strain-relief or strain relieving plate) for receiving incoming cables, and the sealing plate and strain relieving plate are positioned so that the recesses are aligned. A sealing mass (e.g. a mastic wrap) may be positioned within the recesses in the sealing plate. The sealing mass may be prepositioned in the recesses, before insertion of the cables, or the sealing mass may be wrapped around the cable, and inserted with the cable into the recesses in the sealing plate. The recesses in the sealing plate may contain blanking plates detachably connected to the sealing plate. The purpose of these are that in the absence of a cable they present a sealed surface, and they are detached only when it is desired to enter a cable. It may, for example, be desirable to install only some of the cables at one time, and further cables at a later time. The sealing plate may also be provided with a pressing bridge (or outer ring member) which can be urged against the sealing plate, pressing against the sealing mass and inserted cable to enhance the seal.

The sealing plate is preferably positioned over the strain relief plate. It is preferably substantially coterminous therewith, i.e. its periphery corresponds to the periphery of the strain relief plate.

The device of the present invention may also comprise a housing cooperating with the strain relief plate and/or the sealing plate. The housing may be domed shaped, or, for example, cylindrical with a further plate or plates at the opposite end thereof.

Particularly where the device (for strain relief) of the present invention is used in combination with a sealing plate, and/or with a cable housing or enclosure, the lateral insertion of the strain relief elements is particularly useful. For example where a sealing plate is used this typically overlies the strain relief plate, so that the sealing plate itself, or the sealing mass within the recesses in the sealing plate substantially prevents vertical entry of the strain relief elements into the vertical slots in the strain relief plate.

Where the strain relief element comprises a handle portion, a slot cooperating portion and a cable holding portion, the cable holding portion may have any appropriate shape. As an example it may be contoured to fit a cable inserted in the plate recess, e.g. the inwardly facing surface may be shaped concavely or have sloping surfaces to accommodate a cable. The cable holding portion is preferably wholly within the recess, extending inwards from the slot cooperating portion.

Similarly the handle portion, if present, may have any suitable shape making it easy to hold to manipulate the slot cooperating portion of the strain relief device. The handle preferably projects outside the periphery of the plate when the slot cooperating portion of the strain relief device is engaged within the slots in the recesses of the plate.

The invention also provides a method of strain relieving and or sealing cables entering a cable enclosure comprising a plate containing recesses at the periphery thereof through which cables are inserted characterised by providing the internal edges of the recesses with slots positioned in the manner defined by the first aspect of the present invention, and by providing strain relief elements as defined by the first aspect of the present invention, the method comprising:
(a) inserting cables through the recesses in the plate;
(b) inserting the strain relief elements in the slots by moving them in a direction parallel to the plane of the plate; and
(c) retaining the strain relief elements in the slots by sliding them within the slots.

Preferred features of the device of the invention are also preferred for the method according to the invention.

Embodiments of the present invention will now be described, by way of example, wherein;
Figure 1 is a perspective view of a device according to the invention employing sliding movement;
Figure 2 is a perspective view of the strain relief element used in the device of Figure 1;
Figure 3 is a cross-sectional view through Figure 2;
Figure 4 is a perspective view of the device of Figs 1 to 3 used in combination with a sealing plate and a cable housing; and
Figure 5A and 5B show a device and strain relief element employing rotational movement.

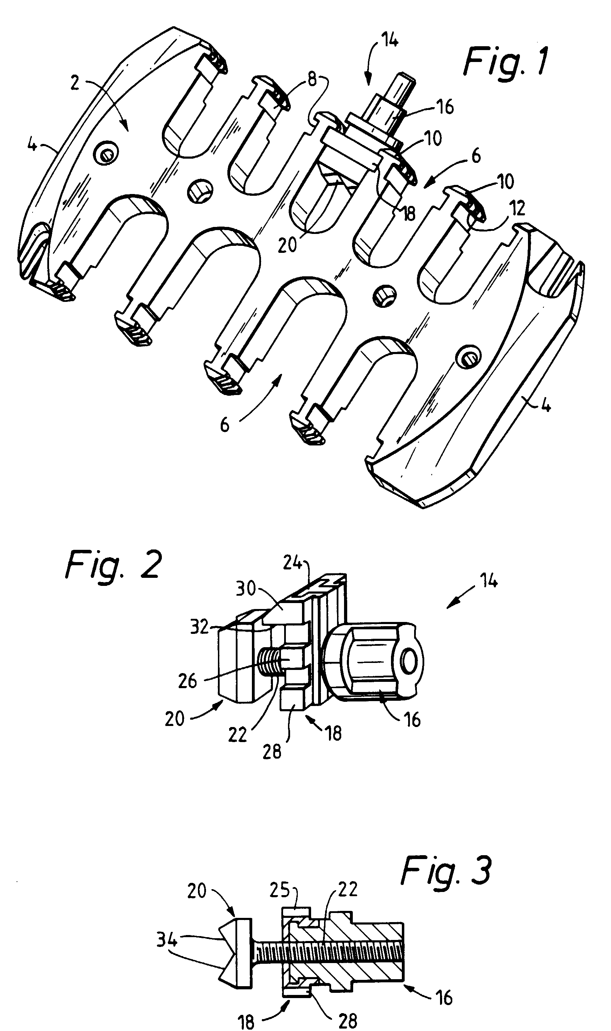

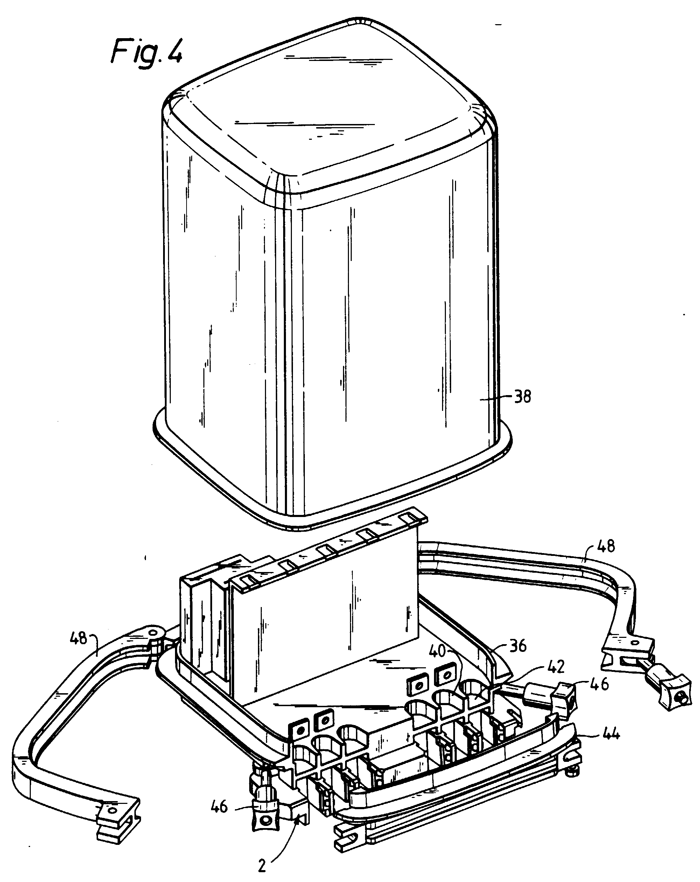

Referring to the drawings, Figure 1 shows the device 1 according to the invention comprising a strain relieving plate 2 which is designed in combination with a sealing plate and housing (described later with reference to Figure 4) to provide a sealed enclosure for cables. The plate 2 forms the base of the enclosure, and is shown in Figure 1 from the underside of the housing. In the example shown the plate 2 is substantially rectangular, with convex curved ends 4. The plate contains U-shaped recesses 6 on both straight sides thereof. The arms of the 'U's are substantially arranged to receive cables (not shown) fed through base 2 into the cable enclosure. The recesses on one side of the plate are larger than those on the other side of the plate to receive different sized cables.

Each U shaped recess 6 contains two slots 8 on the internal edges of the recess 6 extending through the thickness of the plate 2 in a direction substantially perpendicular to the plate 2. A slot 8 is provided on the internal surface of each arm of the U, towards the tip 10 of each arm.

Each tip 10 of each arm of each U-shaped recess 6 also contains two entry ports in the form of channels 12 extending one above e the other in a direction parallel to each other, and to the plane of the plate 2, from each slot 8 to the end of each tip 10 of each arm of each U-shaped recess 6.

Figure 1 also shows a strain relief element 14 in mounted position in the slots 8 of plate 2. The strain relief element 14 and its method of insertion and retention in plate 2 are described in more detail !later with reference to Figures 2 and 3. Essentially it comprises a handle portion 16, a slot cooperating portion 18 and a cable holding portion 20. The cable holding portion projects within the recess 6 and has a curved inward facing surface adapted to press against and strain relieve a cable inserted in the recess.

Referring now to Figures 2 and 3 which describe the strain relief element 14 in more detail, it comprises a handle portion 16 secured to a slot cooperation portion 18 secured in turn to a cable holding portion 20. These are secured together by a central spindle 22. Relative rotation between portions 16,18 and 20 is not possible.

Slot cooperating portion 18 is substantially planar, and comprises a central body portion 24, two projections 26 and 28 extending laterally from the body portion 24, equidistantly, and an end stop 30 which also projects laterally from the body portion 24. The end stop 30 projects a greater distance than projections 26 and 28, presenting shoulders 32 which can act as a stop. The size of the body portion 24 and projections 26 and 28 are such that in the absence of the projections the body portion 24 could simply slide within the arms of the U shaped recess 6 and not be retainable thereto. Also the length of the projections 26 and 28 is such that the slot cooperating portion can only be inserted into the recesses 6 where those projections 26, 28 are aligned with the channels 12 on the internal edges of the recesses 6.

In use the strain relief element 14 is inserted, cable holding portion first, sideways into the recesses 6 in the plate 2. The projections 26 and 28 slide into the channels 12 in the tips 10 of the recesses 6, and then when the planar slot cooperating portion 18 is in line with the slot 8 in the recesses 6, it is slid along and within that slot until the shoulders 32 of its end stop 30 abut against the top face of plate 2 (i.e. the underside of the plate as shown in Figure 1). In this position the projections 26 and 28 are no longer in line with channels 12 in the recesses so lateral outward movement of the strain relief element (i.e. a reversal of the initial sideways insertion direction) is substantially prevented.

The insertion of the strain relief element can conveniently be done by hand, holding the handle portion 16. The design of handle portion 16 is immaterial save to make it easy to handle.

The cable holding portion 20 has two inwardly sloping surfaces 34, each extending substantially perpendicular to the plate 2, i.e. parallel to an inserted cable. This shape cooperates with an inserted cable.

Figure 4 shows the strain relief plate 2 described above used in combination with a sealing plate 36 and dome shaped housing 38 to provide a strain relieved sealed enclosure for cables.

The sealing plate 36 is positioned directly over (and may be secured to) the strain relieving plate 2. It also comprises U-shaped recess 40. These initially contain blanks 42 which temporarily block the recesses 10 but which can be detached when it is desired to enter a cable. A sealing mass (e.g. a mastic wrap) may be inserted in the recess 40 (either before the cable is inserted or together with the cable - e.g. by wrapping it around the cable). Outer pressing element 44 may then be tightly urged against the sealing mass and inserted cables, by means of bolts 46, to seal the cables in the plate 36. The housing 38 may be secured against plates 36 and 12 by means of hinged peripheral clamping elements 48 which cooperates with flanges on the base of the housing and on the plates. In the figures the cables are not shown for clarity.

The advantage of the design of the strain relief plate of the invention is illustrated by Figure 4. Sideways insertion of the strain relief element means that vertical access to the slots 8 from above or below the plane of plate 2 is not required. As is clear in Figure 4, such vertical access would not be possible because of the position of the sealing plate 36.

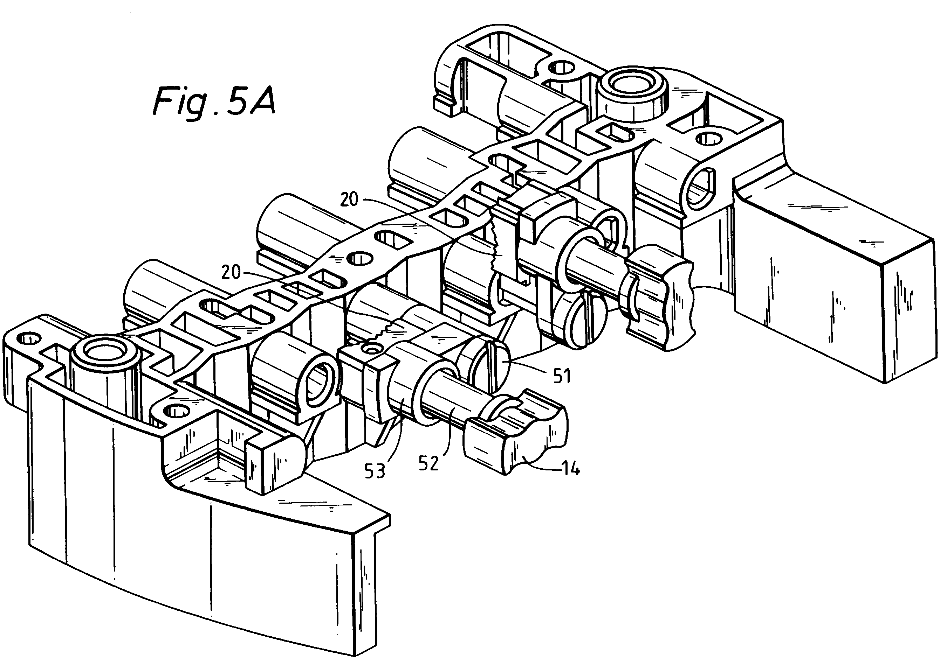

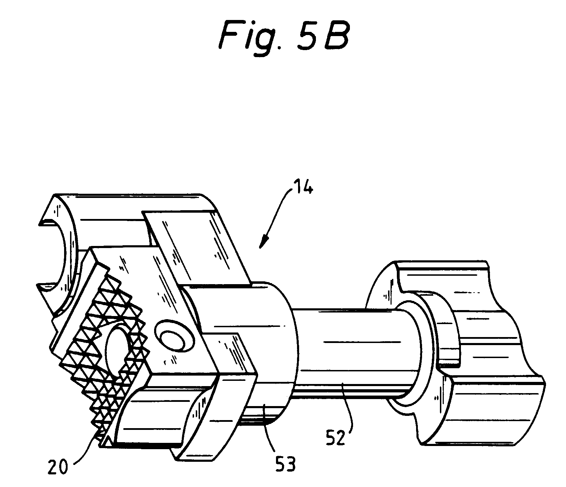

In Figures 5A or 5B the sliding movement of the strain relief element of the previous figures is replaced by rotational movement. Here the strain relief element 14 can be moved by rotation about an axis 51 (which may be a screw or bolt etc. that can secure the element along that axis) to a position in which it bridges the recess. The left hand element shown in the Figure is in such a position, and it has been rotated to that position from a position equivalent to that of the right hand element shown where a cable is able to be inserted into the recess laterally. A cable holding portion 20 is carried by a first screw thread (attached to part 52) that mates with a second screw thread (attached to part 53) such that relative rotation between the first and second screw threads results in the cable holding portion 20 being driven.

## Claims

1. device for strain relieving and/or sealing cables entering a cable enclosure, the device comprising:
a cable support comprising a plate (2) having a recess (6) at a periphery thereof through which, in use, a cable can pass to enter the cable enclosure; and
a strain relief element (14) that can be moved by sliding it substantially perpendicularly to a cable in the recess (6) to a position in which it bridges the recess (6) and is unable to move away from the recess (6) in a direction perpendicular to a cable therein;
the internal edges of the said recess containing slots (8) extending in a direction substantially perpendicular to the plane of the plate, and the strain relief element (14) being so shaped that it can be inserted into the slots (8) by moving it in a direction substantially parallel to the plane of the plate (2), and then retained within the said slots (8) by sliding it within the slots (8).

2. A device according to claim 1, in which the strain relief element (14) has a cable holding portion (20) that can be driven towards or away from a cable in the recess (6) to secure or release the cable.

3. A device according to claim 2, in which the cable holding portion (20) is carried by a first screw thread (22) that mates with a second screw thread of a part (18) of the strain relief element that is secured by sliding to the cable support plate (2), and relative rotation between the first and second screw threads results in the cable holding portion (20) being driven.

4. A device according to any preceding claim, in which the strain relief element (14) comprises: a) a handle portion (16) secured to b) a slot cooperating portion (18), which is in turn secured to c) a cable holding portion (20).

5. A device according to claim 4, in which the said internal edges of the said recess (6) of the plate also contain at least two elongate entry ports (12), on each side of the recess (6), extending from the said slots (8) towards the periphery of the plate (2) in a plane parallel to the plane of the plate, and the slot cooperating portion (18) of the strain relief element (14) comprises a central body portion and at least two projections (26, 28) extending laterally on either side thereof, which projections (26, 28) are arranged to slide through the entry ports (12) at the edges of each recess (6) to engage the slot cooperation portion (18) of the strain relief element (14) in the slot (8) of the recess (6), and which projections (26, 28) can then slide within the said slot (8).

6. A device according to claim 4 or 5, in which the slot cooperating portion (18) of the strain relief element (14) is provided with an end stop (30) substantially to limit the distance the slot cooperating portion (18) can slide within the slots (8) in the plate (2).

7. A device according to any one of claims 4 to 6, in which the slot cooperating portion (18) is substantially planar.

8. A device according to any preceding claim, in which said recess (6) is substantially U-shaped.

9. A device according to any preceding claim, further comprising a sealing plate (36) that is positioned over the said cable support plate (2).

10. A device according to claim 9, wherein the sealing plate (36) is substantially coterminous with the cable support plate (2).

11. A device according to claim 9 or 10, wherein the sealing plate (36) contains recesses (40) that are in line with those in the cable support plate (2).

12. A device according to any preceding claim, further comprising a housing (38), preferably dome shaped, that can be secured to the cable support plate (2) and/or to the sealing plate (36) of any one of claims 9 to 11.

13. A method of strain relieving and/or sealing cables entering a cable enclosure, comprising a plate (2) containing recesses (6) at the periphery thereof through which cables are inserted, wherein the internal edges of the recesses are provided with slots (8) positioned in the manner defined in claim 1, and strain relief elements (14) are provided as defined in claim 1, the method comprising:
(a) inserting cables through the recesses (6) in the plate (2);
(b) inserting the strain relief elements (14) in the slots (8) by moving them in a direction parallel to the plane of the plate (2); and
(c) retaining the strain relief elements (14) in the slots (8) by sliding them within the slots (8).

14. A device for strain relieving and/or sealing cables entering a cable enclosure, the device comprising a plate (2) containing recesses (6) at the periphery thereof, through which, in use, cables can pass to enter the cable enclosure, the internal edges of the said recesses containing slots (8) extending in a direction substantially perpendicular to the plane of the plate (2) and the device also comprising strain relief elements (14) adapted to fit a least partly within the recesses (6), to bridge the entrance of the recesses (6), and to cooperate with the said slots (8), the strain relief elements (14) being so shaped that they can be inserted into the slots (8) by moving them in a direction substantially parallel to the plane of the plate (2), and then retained within the said slots (8) by sliding them within the slots (8).

## Patentansprüche

1. Vorrichtung zur Zugentlastung und/oder zum Abdichten von Kabeln, die in eine Kabelumschließung eintreten, wobei die Vorrichtung folgendes umfaßt:
eine Kabelabstützung, die eine Platte (2) mit einer Aussparung (6) an deren Umfang umfaßt, durch welche ein Kabel bei Verwendung durchtreten kann, um in die Kabelumschließung einzutreten, und
ein Zugentlastungselement (14), das bewegt werden kann, in dem es im wesentlichen rechtwinklig zu einem Kabel in der Aussparung (6) in eine Stellung verschoben wird, in der es die Aussparung (6) überbrückt und unfähig ist, sich von der Aussparung (6) in eine Richtung rechtwinklig zu einem Kabel darin zu bewegen,
wobei die Innenränder der Aussparung Schlitze (8) aufweisen, die sich in einer Richtung im wesentlichen rechtwinklig zu der Ebene der Platte erstrecken, und das Zugentlastungselement (14) derart gestaltet ist, daß es in die Schlitze (8) durch seine Bewegung in einer Richtung im wesentlichen parallel zu der Ebene der Platte (2) eingesetzt werden kann und dann innerhalb der Schlitze (8) durch sein Verschieben innerhalb der Schlitze (8) zurückgehalten werden kann.

2. Vorrichtung nach Anspruch 1, bei der das Zugentlastungselement (14) eine Kabelhalteabschnitt (20) aufweist, der in Richtung auf ein Kabel oder weg von einem Kabel in der Aussparung (6) zur Befestigung oder Freigabe des Kabels bewegt werden kann.

3. Vorrichtung nach Anspruch 2, bei der der Kabelhaltebereich (20) durch ein erstes Schraubengewinde (22) abgestützt ist, das mit einem zweiten Schraubengewinde eines Teils (18) des Zugentlastungselements zusammenpaßt, das durch Verschieben der Kabelabstützplatte (2) befestigt wird, und die relative Drehung zwischen dem ersten und dem zweiten Schraubengewinde dazu führt, daß der Kabelhaltebereich (20) bewegt wird.

4. Vorrichtung nach einem der vorhergehenden Ansprüche, bei der das Zugentlastungselement (14) umfaßt: a) einen Griffbereich (16), der an b) einem mit dem Schlitz zusammenwirkenden Bereich (18) befestigt ist, der seinerseits an c) einem Kabelhaltebereich (20) befestigt ist.

5. Vorrichtung nach Anspruch 4, bei der die Innenränder der Aussparung (6) der Platte auch mindestens zwei längliche Eintrittsöffnungen (12) auf jeder Seite der Aussparung (6) aufweisen, die sich von den Schlitzen (8) in Richtung auf den Umfang der Platte (2) in einer Ebene parallel zu der Ebene der Platte erstrecken, und der mit dem Schlitz zusammenwirkende Bereich (18) des Zugentlastungselements (14) einen zentralen Körperbereich und mindestens zwei Vorsprünge (26, 28) umfaßt, die sich seitlich auf beiden Seiten davon erstrecken, wobei die Vorsprünge (26, 28) so angeordnet sind, daß sie sich durch die Eintrittsöffnungen (12) an den Rändern jeder Aussparung (6) gleitend verschieben, um den mit dem Schlitz zusammenwirkenden Bereich (18) des Zugentlastungselements (14) in dem Schlitz (8) der Aussparung (6) zu erfassen, und wobei die Vorsprünge (26, 28) sich dann innerhalb des Schlitzes (8) gleitend verschieben können.

6. Vorrichtung nach Anspruch 4 oder 5, bei der der mit dem Schlitz zusammenwirkende Bereich (18) des Zugentlastungselements (14) mit einem Endanschlag (30) versehen ist, um im wesentlichen die Strecke zu begrenzen, um die sich der mit dem Schlitz zusammenwirkenden Bereich innerhalb der Schlitze (8) in der Platte (2) gleitend verschieben kann.

7. Vorrichtung nach einem der Ansprüche 4 bis 6, bei der der mit dem Schlitz zusammenwirkende Bereich (18) im wesentlichen planar ist.

8. Vorrichtung nach einem der vorhergehenden Ansprüche, bei der die Aussparung (6) im wesentlichen U-förmig ist.

9. Vorrichtung nach einem der vorhergehenden Ansprüche, die weiterhin eine Abdichtplatte (36) umfaßt, die über der Kabelabstützplatte (2) angeordnet ist.

10. Vorrichtung nach Anspruch 9, dadurch gekennzeichnet, daß die Abdichtplatte (36) mit der Kabelabstützplatte (2) im wesentlichen an der gleichen Stelle endet.

11. Vorrichtung nach Anspruch 9 oder 10, dadurch gekennzeichnet, daß die Abdichtplatte (36) Aussparungen (40) aufweist, die mit denjenigen der Kabelabstützplatte (2) fluchten.

12. Vorrichtung nach einem der vorhergehenden Ansprüche, weiterhin umfassend ein vorzugsweise gewölbtes Gehäuse (38), das an der Kabelabstützplatte (2) und/oder der Abdichtplatte (36) irgendeines der Ansprüche 9 bis 11 befestigt werden kann.

13. Verfahren zur Zugentlastung und/oder zum Abdichten von Kabeln, die in eine Kabelumschließung eintreten, die eine Platte (2) umfaßt, die Aussparungen (6) an deren Umfang aufweist, durch welche die Kabel eingesetzt werden, wobei die Innenränder der Aussparungen mit Schlitzen (8) versehen werden, die auf die in Anspruch 1 angegebene Weise angeordnet werden, und Zugentlastungselemente (14) wie in Anspruch 1 angegeben vorgesehen werden, wobei das Verfahren umfaßt:
(a) Einsetzen der Kabel durch die Aussparungen (6) in der Platte (2),
(b) Einsetzen der Zugentlastungselemente (14), in die Schlitze (8) durch deren Bewegen in einer Richtung parallel zu der Ebene der Platte (2), und
(c) Zurückhalten der Zugentlastungselemente (14) in den Schlitzen (8) durch deren gleitendes Verschieben innerhalb der Schlitze (8).

14. Vorrichtung zur Zugentlastung und/oder zum Abdichten von Kabeln, die in eine Kabelumschließung eintreten, wobei die Vorrichtung eine Platte (2) umfaßt, die Aussparungen (6) an deren Umfang aufweist, durch welche die Kabel bei Verwendung durchtreten können, um in die Kabelumschließung einzutreten, wobei die Innenränder der Aussparungen Schlitze (8) aufweisen, die sich in einer Richtung im wesentlichen rechtwinklig zu der Ebene der Platte (2) erstrecken und die Vorrichtung auch Zugentlastungselemente (14) umfaßt, die mindestens teilweise innerhalb der Aussparungen sitzen können, um den Zugang der Aussparungen (6) überbrücken und mit den Schlitzen (8) zusammenarbeiten zu können, wobei die Zugentlastungselemente (14) derart gestaltet sind, daß sie in die Schlitze (8) eingesetzt werden können, indem sie in einer Richtung im wesentlichen parallel zu der Ebene der Platte (2) bewegt werden und dann innerhalb der Schlitze (8) durch ihr gleitendes Verschieben innerhalb der Schlitze (8) zurückgehalten werden.

## Revendications

1. Dispositif pour alléger les contraintes et/ou rendre étanches des câbles entrant dans une enceinte de câbles, le dispositif comportant :
un support de câble comportant une plaque (2) présentant un évidement (6) à une périphérie de celle-ci à travers lequel, en fonctionnement, un câble peut passer pour entrer dans l'enceinte de câbles ; et
un élément (14) d'allégement de contraintes qui peut être déplacé en le glissant sensiblement perpendiculairement à un câble dans l'évidement (6) vers une position dans laquelle il fait un pont sur l'évidement (6) et est incapable de s'éloigner de l'évidement (6) dans une direction perpendiculaire à un câble à l'intérieur de celui-ci ;
les bords internes dudit évidement comprenant des fentes (8) s'étendant dans une direction sensiblement perpendiculaire au plan de la plaque et l'élément (14) d'allégement de contraintes étant formé de sorte qu'il peut être inséré dans les fentes (8) en le déplaçant dans une direction sensiblement parallèle au plan de la plaque (2) et, ensuite, retenu à l'intérieur desdites fentes (8) en le glissant à l'intérieur des fentes (8).

2. Dispositif selon la revendication 1, dans lequel l'élément (14) d'allégement de contraintes comporte une partie (20) de support de câbles qui peut être rapprochée ou éloignée d'un câble dans l'évidement (6) pour fixer ou libérer le câble.

3. Dispositif selon la revendication 2, dans lequel la partie (20) de support de câbles est supportée par un premier filet de vis (22) qui s'apparie avec un second filet de vis d'une partie (18) de l'élément d'allégement de contraintes qui est fixée en glissant vers la plaque (2) de support de câbles et la rotation relative entre les premier et second filets de vis provoque l'entraînement de la partie (20) de support de câbles.

4. Dispositif selon l'une quelconque des revendications précédentes, dans lequel l'élément (14) d'allégement de contraintes comporte : a) une partie (16) de poignée fixée à b) une partie (18) coopérant avec les fentes qui est, à son tour, fixée à c) une partie (20) de support de câbles.

5. Dispositif selon la revendication 4, dans lequel lesdits bords internes dudit évidement (6) de la plaque comprennent également au moins deux orifices d'entrée (12) allongés, sur chaque côté de l'évidement (6), s'étendant depuis lesdites fentes (8) vers la périphérie de la plaque (2) dans un plan parallèle au plan de la plaque et la partie (18) coopérant avec les fentes de l'élément (14) d'allégement de contraintes comporte une partie de corps centrale et au moins deux saillies (26, 28) s'étendant latéralement de part et d'autre de celui-ci, lesquelles saillies (26, 28) sont agencées pour glisser à travers les orifices d'entrée (12) aux bords de chaque évidement (6) pour se mettre en prise avec la partie (18) coopérant avec les fentes de l'élément (14) d'allégement de contraintes dans la fente (8) de l'évidement (6) et lesquelles saillies (26, 28) peuvent ensuite glisser à l'intérieur de ladite fente (8).

6. Dispositif selon la revendication 4 ou 5, dans lequel la partie (18) coopérant avec les fentes de l'élément (14) d'allégement de contraintes est pourvue d'un arrêt (30) d'extrémité pour en grande partie limiter la distance sur laquelle la partie (18) coopérant avec les fentes peut glisser à l'intérieur des fentes (8) dans la plaque (2).

7. Dispositif selon l'une quelconque des revendications 4 à 6, dans lequel la partie (18) coopérant avec les fentes est sensiblement plane.

8. Dispositif selon l'une quelconque des revendications précédentes, dans lequel ledit évidement (6) est sensiblement en forme de U.

9. Dispositif selon l'une quelconque des revendications précédentes, comportant de plus une plaque (36) d'étanchéité qui est positionnée par dessus ladite plaque (2) de support de câbles.

10. Dispositif selon la revendication 9, dans lequel la plaque (36) d'étanchéité se termine sensiblement au même endroit que la plaque (2) de support de câbles.

11. Dispositif selon la revendication 9 ou 10, dans lequel la plaque (36) d'étanchéité comprend des évidements (40) qui sont en ligne avec ceux dans la plaque (2) de support de câbles.

12. Dispositif selon l'une quelconque des revendications précédentes, comportant de plus un boîtier (38), de préférence en forme de dôme, qui peut être fixé à la plaque (2) de support de câbles et/ou à la plaque (36) d'étanchéité de l'une quelconque des revendications 9 à 11.

13. Procédé pour alléger les contraintes et/ou rendre étanches des câbles entrant dans une enceinte de câbles, comportant une plaque (2) comprenant des évidements (6) à sa périphérie à travers lesquels des câbles sont insérés, dans laquelle les bords internes des évidements sont pourvus de fentes (8) positionnées de la manière définie dans la revendication 1 et des éléments (14) d'allégement de contraintes sont prévus tels que définis dans la revendication 1, le procédé comportant :
(a) l'insertion de câbles à travers les évidements (6) dans la plaque (2) ;
(b) l'insertion des éléments (14) d'allégement de contraintes dans les fentes (8) en les déplaçant dans une direction parallèle au plan de la plaque (2) ; et
(c) la retenue des éléments (14) d'allégement de contraintes dans les fentes (8) en les glissant à l'intérieur des fentes (8).

14. Dispositif pour alléger les contraintes et/ou rendre étanches des câbles entrant dans une enceinte de câbles, le dispositif comportant une plaque (2) comprenant des évidements (6) à sa périphérie, à travers lesquels, en fonctionnement, des câbles peuvent passer pour entrer dans le enceinte de câbles, les bords internes desdits évidements comportant des fentes (8) s'étendant dans une direction sensiblement perpendiculaire au plan de la plaque (2) et le dispositif comportant également des éléments (14) d'allégement de contraintes adaptés pour s'ajuster, au moins en partie, à l'intérieur des évidements (6), pour faire un pont sur l'entrée des évidements (6) et pour coopérer avec lesdites fentes (8), les éléments (14) d'allégement de contraintes étant formés de sorte qu'ils peuvent être insérés dans les fentes (8) en les déplaçant dans une direction sensiblement parallèle au plan de la plaque (2) et, ensuite, retenus dans lesdites fentes (8) en les glissant à l'intérieur des fentes (8).
